# EUROPÄISCHE PATENTSCHRIFT

(11) **EP 2 117 978 B1**
(45) Veröffentlichungstag und Bekanntmachung des Hinweises auf die Patenterteilung: **03.04.2013**
(21) Anmeldenummer: 07856959.7
(22) Anmeldetag: 20.12.2007
(51) Int. Cl.: B65G 47/91

(54) **VORRICHTUNG ZUR ENTFERNUNG VON BEHÄLTERN AUS EINER BEHÄLTERBEHANDLUNGSANLAGE**
DEVICE FOR REMOVING CONTAINERS FROM A CONTAINER TREATMENT INSTALLATION
DISPOSITIF POUR ÉVACUER DES CONTENANTS D'UNE INSTALLATION DE TRAITEMENT DE CONTENANTS

(30) Priorität: 13.01.2007 DE 102007002011
(43) Veröffentlichungstag der Anmeldung: 18.11.2009
(73) Patentinhaber: KHS GmbH, 44143 Dortmund (DE)
(72) Erfinder: JENDRICHOWSKI, Klaus, 59439 Holzwickede (DE)
(86) Internationale Anmeldenummer: PCT/EP2007/011236
(87) Internationale Veröffentlichungsnummer: WO 2008/083825

(56) Entgegenhaltungen:
- EP-A- 0 017 489
- EP-A- 0 596 189
- EP-A- 0 930 136
- EP-A- 1 700 643
- GB-A- 2 193 479
- US-A- 2 677 471
- US-A- 4 767 142
- US-A- 4 822 236
- US-A- 5 135 276
- US-A- 5 219 432
- US-A- 5 419 350
- US-A- 5 467 790

## Beschreibung

Die Erfindung betrifft eine Vorrichtung zur Entfernung von Behältern aus einer Behälterbehandlungsanlage.

Beispielsweise in großen Getränkeabfüllanlagen kommt es vor, dass einzelne Behälter im laufenden Betrieb aus der Anlage entfernt werden müssen. Dies kann beispielsweise dann passieren, wenn ein Behälter sich verklemmt oder umfällt und dann nicht mehr weiter transportiert oder verarbeitet werden kann. Ein möglicher Anwendungsfall sind hier Behälterreinigungsanlagen, z.B. Flaschenspülanlagen. Hier werden die zu spülenden Flaschen über mehrere Transportstrecken angeliefert und dann auf eine Vielzahl von parallelen Einlaufführungen der Spülanlage aufgeteilt. Im Bereich dieser Einlaufführungen, in denen die Behälter von den Transportstrecken auf die Führungen aufgefächert werden, stoßen die aufrecht stehenden Flaschen aneinander und verschieben sich nicht immer gleichmäßig, so dass es vorkommt, dass einzelne Flaschen umfallen. Dann liegen sie vor den Führungen und können Störungen verursachen.

Aus der EP 1 700 643 A2 ist eine Behälteraufgabe für eine Reinigungsmaschine für Falschen bekannt, welche den hohen Druck und damit die Beschädigung von Flaschen dadurch mindert, indem die Flaschen in Einzelgassen und aktiv mit Einzelbändern möglichst weit hin zur Behälterabgabe an die Reinigungsmaschine geleitet werden.

Weiterhin ist aus der GB 2 193 479 A eine Ausleitung von umgefallenen Flaschen oder zerbrochenen Flaschen bekannt, in dem diese aus dem vielreihigen Verband mit entsprechender Einzelbandsteuerung hin zu einem zentralen Auslass geleitet werden.

US-A-2677471 offenbart eine Vorrichtnung zur Entfernung von Behältern gemäß dem Oberbegriff Anspruchs 1.

Aufgrund der großen Breite derartiger Anlagen sind die umgefallenen Behälter, wenn überhaupt, nur im Randbereich unmittelbar von außen zugänglich, ohne dass die Anlage gestoppt werden muss. Ein Herunterfahren der Anlage, um diese Störung zu beseitigen, kann zu Ausfällen der Gesamtanlage führen und damit zu Produktionsausfällen und Kostensteigerungen.

Aufgabe der Erfindung ist es, eine Vorrichtung zur Entfernung von Behältern aus einer Behälterbehandlungsanlage zur Verfügung zu stellen, die es ermöglicht, einzelne Behälter im laufenden Betrieb schnell und zuverlässig aus der Anlage zu entfernen.

Die Erfindung erreicht dies durch eine Vorrichtung mit den Merkmalen des Patentanspruches 1.

Mit einem derartigen Handhabungselement können die Behälter erfasst und aus der Anlage entfernt werden, ohne dass diese dazu angehalten werden müßte. Zudem ist es möglich, auch Flaschen zu erreichen, die sich bei großen Anlagen in den Bereichen befinden, die außerhalb der unmittelbaren Zugriffsbereiche menschlicher Bediener liegen.

Dazu ist ein Handhabungselement mit einem endseitig angeordneten Sauggummi vorgesehen, das mit einem Unterdruck beaufschlagt werden kann. So wird der Behälter, beispielsweise eine umgefallene Flasche, an dem Sauggummi gehalten und kann so entfernt werden.

Durch das wahlweise Anlegen eines Unterdruckes ist ein einfaches Aufnehmen und Wiederfreigeben des Behälters möglich. Zudem kann durch eine möglicherweise regelbare Stärke des Unterdruckes die Haltekraft den Notwendigkeiten angepasst werden.

Ausgestaltungen der Erfindung ergeben sich aus den Unteransprüchen.

In einer ersten Ausgestaltung der erfindungsgemäßen Vorrichtung ist das Handhabungselement auf einem verschiebbaren Schlitten angeordnet und in sich längs ausfahrbar ausgebildet. Der Schlitten befindet sich in einer Führung, die den abzudeckenden Aufnahmebereich überdeckt, so dass der Schlitten zusammen mit dem Handhabungselement an die Positionen verfahren werden kann, an denen Behälter entfernt werden müssen. Durch die Längsverschiebbarkeit des Handhabungselementes können unten liegende Flaschen aufgenommen und nach oben hin entnommen und so seitlich in einen Abgabebereich transportiert werden. Zweckmäßigerweise ist der Aufnahmebereich der Einlaufbereich, einer Behälterbehandlungsmaschine, und der Abgabebereich in einer Position, in der die Flaschen ohne Störung abgelegt werden können.

Grundsätzlich kann der Schlitten mit dem Handhabungselement manuell verfahren werden.

Vorteilhaft ist es allerdings, wenn dies automatisch geschieht.

Hierzu ist in Ausgestaltung eine Detektionsvorrichtung vorgesehen, die erkennen kann, wann und wo ein Behälter entfernt xerden muss, also beispieisweise eine Flasche umgefallen ist. Dies kann auf optischem Wege über Sensorleisten oder Kamerasysteme mit entsprechenden Bildverarbeitungssystemen oder auch durch mechanische Sensorik erfolgen. Zusätzlich ist eine Steuervorrichtung vorgesehen, die nach der Detektion eines zu entfernenden Behälters den Schlitten an die entsprechende Position bewegt, das Handhabungselement zum Behälter hin ausfährt und durch Aktivieren des Unterdruckes den Behälter erfasst. In der Folge kann durch die Steuereinrichtung das Handhabungselement wieder zurückgezogen und so der Behälter nach oben aus der Anlage entfernt werden. Durch anschließendes Verfahren des Schlittens in den Abgabebereich und Deaktivierung des Unterdruckes wird der Behälter dann freigegeben und die Vorrichtung ist bereit zur Entfernung des nächsten Behälters.

In einer bevorzugten Ausgestaltung der erfindungsgemäßen Vorrichtung ist das

Handhabungselement mit dem endseitig angeordneten Sauggummi über ein Gelenk mit einem Rohr verbunden, das in Ausgestaltung längs verschiebbar ausgebildet ist. An dem Rohr kann sich ein Griffelement, ggf. mit einer Steuervorrichtung, befinden, mit der ein Unterdruck durch das Rohr an dem Sauggummi angelegt werden kann. Dies kann durch einen Druckluftanschluss mit einem steuerbaren Vakuumelement realisiert sein.

In dieser Vorrichtung ist ebenfalls durch einen menschlichen Bediener eine Entfernung von Behältern aus einer Behälterbehandlungsanlage möglich. Durch die längs verschiebbare Rohrführung lassen sich auch weit entfernte Behälter erfassen. Durch die gelenkige Verbindung kann dies auch an unzugänglichen Stellen geschehen.

Die Erfindung ist anhand der beigefügten Zeichnung näher erläutert. Diese zeigt in
- Fig. 1: eine schematische zweidimensionale Ansicht einer Behälterbehandlungsanlage in einer ersten Ausgestaltung der Erfindung.
- Fig. 2: eine Vergrößerung des markierten Bereiches aus Figur 1 sowie in

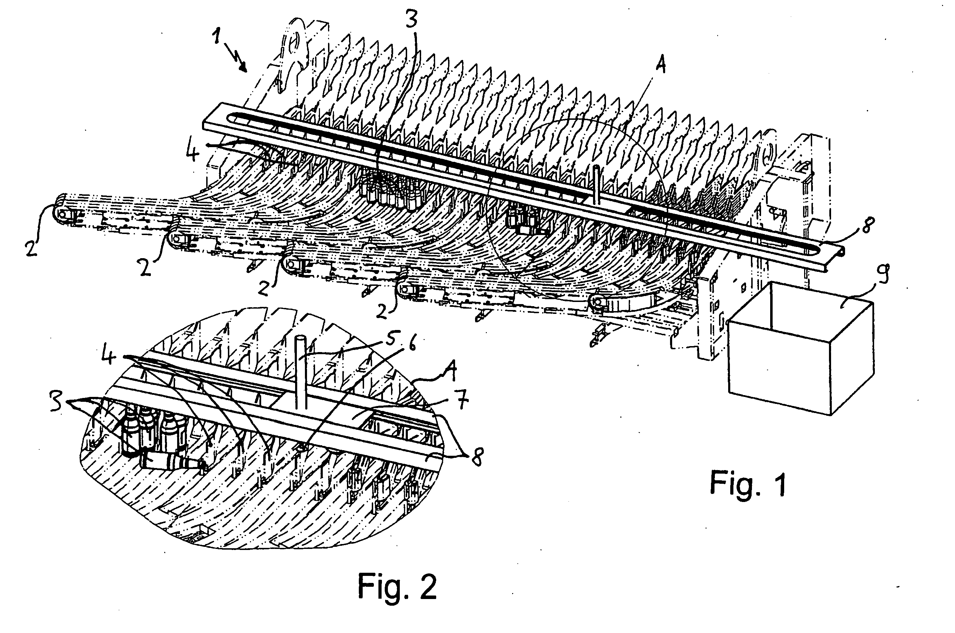

Der Einlaufbereich 1 einer nicht näher dargestellten Behälterbehandlungsanlage, in diesem Fall einer Flaschenspülmaschine, ist in Figur 1 näher dargestellt. Über vier Transportstrecken 2 werden Behälter, in diesem Fall Flaschen 3, an der Maschine angeliefert. Die Behälterbehandlungsanlage weist eine Vielzahl von parallelen Einlaufführungen 4 auf, vor denen die Flaschen 3 aufgefächert werden. Zur Verdeutlichung ist der Ausschnitt A in Figur 2 noch einmal vergrößert dargestellt. Die Vielzahl von parallelen Behälterführungen 4 dienen dazu, eine große Anzahl von Flaschen gleichzeitig spülen zu können und so eine hohe Leistung der Anlage zu erzielen.

Dabei kommt es vor, dass, wie dargestellt, Flaschen 3 umfallen und die Einlaufführungen 4 teilweise blockieren. In diesem Fall wird zumindest der Durchsatz der Anlage verringert, da die dahinter befindlichen Anlagenzweige nicht mehr mit Flaschen 3 versorgt werden können. Es ist aber darüber hinaus möglich, dass die umgefallenen Flaschen weitere Flaschen 3 zum Umfallen bringen oder sich sogar verkeilen und so Störungen bis hin zum Anlagenausfall provozieren.

Zur Lösung dieses Problemes ist erfindungsgemäß ein Handhabungselement 5 vorgesehen, an dessen unterem Ende ein Sauggummi 6 angeordnet ist, der mit einem Unterdruck beaufschlagt werden kann. Hierdurch entsteht eine Saugwirkung, die dafür sorgt, dass eine Flasche 3 bei Kontakt mit dem Sauggummi 6 und anliegendem Unterdruck am Sauggummi 6 gehalten wird. Das Handhabungselement 5 ist höhenverstellbar, so dass der Sauggummi 6 mit einer ggf. daran befindlichen Flasche 3 nach unten und oben bewegt werden kann.

Das gesamte Handhabungselement 5 ist auf einem verfahrbaren Schlitten 7 angeordnet, der auf einer Führungsschiene 8 über die gesamte Breite des Einlaufbereiches 1 der Behälterbehandlungsanlage hin und her gefahren werden kann.

Außerdem sind die Führungsschienen 8 so bemessen, dass der Schlitten 7 über einen Abgabecontainer 9 verfahren werden kann, der sich seitlich neben der Anlage befindet.

Zur Überwachung der Anlage ist eine nicht näher dargestellte Detektionsvorrichtung vorgesehen. Diese ist in Ausgestaltung als Kamerasystem ausgebildet, das mittels einer nachgeschalteten Bildbearbeitungsanlage den ordnungsgemäßen Zustand des Einlaufbereiches 1 überwacht und erkennen kann, dass eine Flasche 3 umgefallen ist und an welcher Position des Einlaufbereiches 1 sie liegt.

Eine ebenfalls nicht näher dargestellte Steuervorrichtung verfährt daraufhin den

Schlitten 7 mit dem Handhabungselement 5 über die umgefallene Flasche, woraufhin das Handhabungselement 5 mit seinem Sauggummi 6 nach unten gefahren wird, ein Unterdruck an den Sauggummi 6 angelegt und anschließend das Handhabungselement 5 wieder nach oben gefahren wird, wobei durch den anliegenden Unterdruck die umgefallene Flasche mit nach oben aus dem Einlaufbereich 1 entfernt wird. Daraufhin wird der Schlitten 7 von der Steuereinrichtung über den Abgabecontainer 9 gefahren und der Unterdruck deaktiviert, so dass die Flasche freigegeben wird und in den Abgabecontainer 9 fällt.

Das System ist anschließend bereit, eine weitere umgefallene Flasche aufzunehmen und aus der Maschine zu entfernen.

Sollten Flaschen 3 nicht unmittelbar vor den Einlaufführungen 4 zu Fall kommen, werden sie durch die generelle Vorwärtsbewegung der gesamten Flaschen nach und nach hin zu den Einlaufführungen 4 bewegt, von wo sie dann auf die beschriebene Art und Weise aus der Anlage entfernt werden kann.

Natürlich ist die Erfindung nicht auf die vorbeschriebenen Ausführungsbeispiele beschränkt, sondern kann in vielfältiger Hinsicht abgewandelt werden, ohne den Grundgedanken zu verlassen. Insbesondere die genaue Ausgestaltung des Handhabungselementes und seine Bewegung in den Bereich der zu entfernenden Flaschen ist variabel. Grundsätzlich sind auch roboterarmartige Gestaltungen denkbar oder mehrdimensional verfahrbare Schlittenanordnungen.

### Bezugszeichenliste

- 1: Einlaufbereich
- 2: Transportstrecken
- 3: Flaschen
- 4: Einlaufführungen
- 5: Handhabungselement
- 6: Sauggummi
- 7: Schlitten
- 8: Führungsschiene
- 9: Abgabecontainer

## Patentansprüche

1. Vorrichtung zur Entfernung von Behältern (3) aus einer Behälterbehandlungsanlage, wobei ein Handhabungselement (5) mit einem endseitig angeordneten und mit einem Unterdruck beaufschlagbaren Sauggummi (6) vorgesehen ist, das derartig ausgebildet ist, dass ein Behälter (3) beim Anliegen des Unterdruckes von dem Sauggummi (6) gehalten wird, wobei
das Handhabungselement (5) an einem verschiebbaren Schlitten (7) angeordnet und/oder längs ausfahrbar ausgebildet ist, wobei der Schlitten (7) zwischen einem Aufnahmebereich und einem Abgabebereich verschiebbar ist, welcher Aufnahmebereich den Behälter-Einlaufbereich der Behälterbehandlungsanlage überdeckt, dardurch gekennzeichnet, dass der Aufnahmebereich parallelen Behälter-Einlaufführungen (4) einer Behälterspülmaschine überdeckt.

2. Vorrichtung nach Anspruch 1, **dadurch gekennzeichnet, dass** eine Detektionsvorrichtung zur Erkennung der zu entfernenden Behälter (3) vorgesehen ist.

3. Vorrichtung nach Anspruch 1 oder 2, **dadurch gekennzeichnet, dass** die Detektionsvorrichtung als optisches Erfassungssystem und/oder als Kamerasystem und/oder als mechanisches Abtastsystem ausgebildet ist.

4. Vorrichtung nach Anspruch 1 oder einem der folgenden, **dadurch gekennzeichnet, dass** eine Steuervorrichtung vorgesehen ist, die derartig ausgebildet ist, dass sie nach einer Detektion eines zu entfernenden Behälters (3) den Schlitten (7) zu dem zu entfernenden Behälter (3) bewegt, das Handhabungselement (5) zu dem Behälter (3) hin ausfährt, den Unterdruck an den Sauggummi (6) anlegt und so den Behälter (3) erfasst.

5. Vorrichtung nach Anspruch 1 oder einem der folgenden, **dadurch gekennzeichnet, dass** die Steuervorrichtung außerdem derartig ausgebildet ist, dass sie das Handhabungselement (5) zurückfährt, den Schlitten (7) in den Abgabebereich bewegt, dort den Unterdruck abstellt und so den Behälter (3) freigibt.

## Claims

1. Device for removing containers (3) from a container treatment installation, wherein a handling element (5) is provided with a suction rubber (6) which is arranged on one end and subjected to a depression and formed such that a container (3) is held by the suction rubber (6) when a depression is applied, wherein the handling element (5) is arranged on a moveable carriage (7) and/or is formed linearly extendable, wherein the carriage (7) is moveable between a receiver region and a discharge region, which receiver region covers the container inlet region of the container treatment installation, **characterised in that** the receiver region covers parallel container inlet guides (4) of a container rinsing machine.

2. Device according to claim 1, **characterised in that** a detection device is provided to detect the containers (3) to be removed.

3. Device according to claim 1 or 2, **characterised in that** the detection device is formed as an optical detection system and/or as a camera system and/or as a mechanical scanning system.

4. Device according to claim 1 or any of the following, **characterised in that** a control device is provided which is formed such that after detection of a container (3) to be removed, it moves the carriage (7) to the container (3) to be removed, extends the handling element (5) to the container (3), applies the depression to the suction rubber (6) and thus holds the container (3).

5. Device according to claim 1 or any of the following, **characterised in that** the control device is also formed such that it retracts the handling element (5), moves the carriage (7) into the discharge region, interrupts the depression there and thus releases the container (3).

## Revendications

1. Dispositif servant à évacuer des récipients (3) d'une installation de traitement de récipients, sachant qu'un élément de manipulation (5) est doté d'une ventouse (6) disposée côté extrémité et soumise à l'action d'une dépression, laquelle ventouse (6) est réalisée de telle manière qu'elle maintient un récipient (3) lors de l'application de la dépression,
sachant que
l'élément de manipulation (5) est disposé sur un chariot mobile (7) et/ou est réalisé de manière amovible longitudinalement, sachant que le chariot (7) peut se déplacer entre une zone de prise en charge et une zone de restitution, la zone de prise en charge recouvrant la zone d'arrivée des récipients de l'installation de traitement des récipients,
**caractérisé en ce que** la zone de prise en charge recouvre des dispositifs de guidage (4) parallèles à l'arrivée des récipients d'une machine servant à rincer les récipients.

2. Dispositif selon la revendication 1, **caractérisé en ce qu'**un dispositif de détection est prévu pour identifier les récipients (3) devant être évacués.

3. Dispositif selon la revendication 1 ou 2, **caractérisé en ce que** le dispositif de détection se présente sous la forme d'un système de saisie optique et/ou d'un système de caméra et/ou d'un système mécanique de balayage.

4. Dispositif selon la revendication 1 ou selon l'une quelconque des revendications précédentes, **caractérisé en ce qu'**est prévu un dispositif de commande qui est réalisé de telle manière qu'il déplace le chariot (7) en direction du récipient devant être évacué (3) après la détection de ce dernier, qu'il déplace l'élément de manipulation (5) en direction du récipient (3), applique la dépression au niveau de la ventouse (6) pour saisir ainsi le récipient (3).

5. Dispositif selon la revendication 1 ou selon l'une quelconque des revendications précédentes, **caractérisé en ce que** le dispositif de commande est réalisé en outre de telle manière qu'il fait faire marche arrière à l'élément de manipulation (5), **en ce qu'**il déplace le chariot (7) dans la zone de restitution, où il arrête d'appliquer la dépression libérant ainsi le récipient (3).
